# FASCICULE DE BREVET EUROPEEN

(11) **EP 3 272 631 B1**
(45) Date de publication et mention de la délivrance du brevet: **07.08.2019**
(21) Numéro de dépôt: 17181986.5
(22) Date de dépôt: 18.07.2017
(51) Int. Cl.: B62H 5/00, B62H 3/00, G07F 17/00

(54) **SYSTÈME AUTOMATIQUE DE STOCKAGE DE CYCLES ET POSTE DE VERROUILLAGE POUR UN TEL SYSTÈME**
AUTOMATISCHES SYSTEM ZUR SPEICHERUNG VON FAHRRÄDERN UND VERRIEGELUNGSSTATION FÜR EIN SOLCHES SYSTEM
AUTOMATIC CYCLE-STORAGE SYSTEM AND LOCKING STATION FOR SUCH A SYSTEM

(30) Priorité: 18.07.2016 FR 1656849
(43) Date de publication de la demande: 24.01.2018
(60) Demande divisionnaire: 18186435.6
(73) Titulaire: JCDecaux SA, 92200 Neuilly-Sur-Seine (FR)
(72) Inventeur: ZEFERINO, Emmanuel, 78180 MONTIGNY LE BRETONNEUX (FR); FORESTIER, Jean-Marc, 78180 MONTIGNY LE BRETONNEUX (FR); ARDOUIN, Thieric, 78340 LES CLAYES SOUS BOIS (FR)
(74) Mandataire: Cabinet Plasseraud

(56) Documents cités:
- WO-A1-01/51342
- DE-A1-102010 011 092
- FR-A1- 2 897 589
- US-A1- 2013 255 336

## Description

### DOMAINE DE L'INVENTION

La présente invention est relative aux systèmes automatiques de stockage de cycles, aux cycles et aux postes de verrouillage pour de tels systèmes.

Plus particulièrement, l'invention concerne un système automatique de stockage de cycles comprenant :
- une pluralité de cycles ayant chacun :
   - une structure montée sur roues, la structure incluant un cadre et une fourche portant un guidon et montée pivotante sur le cadre,
   - un premier organe d'accrochage monté sur ladite structure,
- une pluralité de postes de verrouillage adaptés pour recevoir et verrouiller les cycles, chaque poste de verrouillage comprenant un support fixe et un deuxième organe d'accrochage, le deuxième organe d'accrochage étant adapté pour coopérer avec le premier organe d'accrochage d'un cycle pour verrouiller le cycle sur le poste de verrouillage.

Un système automatique de stockage de cycles de ce type peut être utilisé par exemple pour mettre des cycles à disposition du public, moyennant identification de l'emprunteur du cycle et éventuellement paiement d'une location.

### ARRIERE PLAN DE L'INVENTION

Le document FR-2954265A décrit un exemple d'un tel système de stockage de cycles.

Le document DE 10 2010 011 092 A1 décrit un système de stockage de cycles selon le préambule de la revendication 1 et un poste de verrouillage selon le préambule de la revendication 12.

### OBJETS DE L'INVENTION

Selon un premier aspect, l'invention a pour but d'améliorer la résistance des systèmes de stockage de cycles au vandalisme.

A cet effet, selon le premier aspect de l'invention, dans un système de stockage de cycles du genre en question, le deuxième organe d'accrochage est articulé sur le support avec trois degrés de liberté en rotation, le deuxième organe d'accrochage est sollicité élastiquement vers une position de repos lorsque ledit deuxième organe d'accrochage est déplacé par rapport à la position de repos et des moyens élastiques sont adaptés pour exercer sur le deuxième organe d'accrochage une force de rappel croissante lorsque le deuxième organe d'accrochage s'éloigne de la position de repos.

Grâce à ces dispositions, le cycle est maintenu dans une position normale de verrouillage en l'absence de sollicitation. Si une personne tente de détériorer le cycle en le déplaçant de force par rapport à sa position normale pendant qu'il est verrouillé sur le poste de verrouillage, le deuxième organe d'accrochage pivote par rapport au support pendant que les moyens de rappel élastiques exercent une force de rappel élastique, vers la position normale. La personne qui tente de vandaliser le cycle n'a donc pas l'effet de levier qu'elle aurait si le deuxième organe d'accrochage était rigidement fixé au support, ce qui contribue à protéger l'intégrité mécanique du cycle.

Les dispositions précitées ont en outre l'avantage de ne pas augmenter le poids et l'encombrement du cycle.

Dans des modes de réalisation particuliers du système selon le premier aspect de l'invention, le système automatique de stockage de cycles peut comporter en outre une ou plusieurs des dispositions suivantes :
- les premier et deuxième organes de verrouillage sont conçus pour que le cycle verrouillé sur le poste de verrouillage présente un plan moyen de verrouillage vertical lorsque le deuxième organe d'accrochage est en position de repos, et le deuxième organe d'accrochage est adapté pour pivoter par rapport au support selon un premier axe de rotation vertical et selon un deuxième axe de rotation horizontal parallèle au plan moyen de verrouillage ;
- le deuxième organe d'accrochage est articulé sur le support par une rotule solidaire dudit deuxième organe d'accrochage ;
- la rotule est montée dans un logement de rotule ;
- le logement de rotule comporte :
   - une paroi avant comportant une ouverture vers le deuxième organe d'accrochage et présentant une surface intérieure,
   - un fond à l'opposé de la paroi avant,
      la rotule présentant une forme semi-sphérique ayant une partie sphérique en regard de ladite surface intérieure et une embase aplatie en regard du fond, au moins un plot en élastomère étant interposé entre l'embase et le fond du logement de rotule ;
- plusieurs plots en élastomère sont interposés entre l'embase de la rotule et le fond du logement de rotule, et sont répartis autour d'un axe central ;
- le premier organe d'accrochage est adapté pour pivoter sur le deuxième organe d'accrochage autour d'un axe de rotation sensiblement vertical lorsque le premier organe d'accrochage est verrouillé sur le deuxième organe d'accrochage ;
- le premier organe d'accrochage comporte un barreau sensiblement cylindrique à section circulaire qui s'étend normalement sensiblement verticalement lorsque le cycle est dans une position normale d'utilisation, le deuxième organe d'accrochage comportant une gâche sensiblement en forme de C ouverte verticalement vers le haut et vers le bas en position de repos du deuxième organe d'accrochage et ouverte horizontalement selon une direction d'engagement ;
- le système comporte au moins une station de stockage de cycles qui comprend plusieurs postes de verrouillages juxtaposés se présentant sous forme de bornes fixées au sol, le deuxième organe d'accrochage étant adapté pour permettre au cycle de pivoter horizontalement sur une plage angulaire telle qu'un cycle verrouillé sur un poste de verrouillage situé entre deux postes de verrouillages adjacents puisse venir en butée angulaire contre chacun des deux postes de verrouillages adjacents ;
- le premier organe d'accrochage est articulé sur la structure ;
- le premier organe d'accrochage est articulé sur le cadre ;
- le cycle présente un plan moyen vertical en position normale d'utilisation et le premier organe d'accrochage est monté pivotant sur la structure autour d'un axe de rotation sensiblement perpendiculaire au plan moyen du cycle ;
- le premier organe d'accrochage est relié élastiquement à la structure du cycle de façon à être sollicité élastiquement vers une position de normale ;
- le cycle comporte :
   - un câble antivol ayant une première extrémité solidaire de la structure du cycle et une deuxième extrémité pourvue d'une broche, adaptée pour s'engager dans un logement de broche ménagé dans la structure du cycle,
   - un verrou d'antivol adapté pour sélectivement verrouiller la broche dans le logement de broche,
   - un organe de butée qui est monté mobile sur la structure du cycle entre une position escamotée où ledit organe de butée n'interfère pas avec le verrouillage du premier organe d'accrochage sur le deuxième organe d'accrochage, et une position de blocage où ledit organe de butée est déplacé vers le premier organe d'accrochage et empêche le verrouillage du premier organe d'accrochage sur le deuxième organe d'accrochage, l'organe de butée étant sollicité élastiquement vers la position escamotée et le logement de broche étant disposé pour que la broche d'antivol repousse l'organe de butée en position de blocage lorsque ladite broche est verrouillée dans le logement de broche ;
- le deuxième organe d'accrochage est adapté pour empêcher l'organe de butée de se déplacer de la position escamotée à la position de blocage lorsque le premier organe d'accrochage est verrouillé sur le deuxième organe d'accrochage ;
- l'organe de butée est monté coulissant dans le logement de broche, ledit logement de broche comportant une première extrémité ouverte adaptée pour recevoir la broche et une deuxième extrémité ouverte adaptée pour laisser passer l'organe de butée lorsqu'il est repoussé par la broche vers la position de blocage.

Par ailleurs, le premier aspect de l'invention concerne également un poste de verrouillage pour un système tel que décrit ci-dessus, adapté pour verrouiller un cycle ayant un premier organe d'accrochage, le poste de verrouillage comprenant un support fixe et un deuxième organe d'accrochage, le deuxième organe d'accrochage étant adapté pour coopérer avec le premier organe d'accrochage d'un cycle pour verrouiller le cycle sur le poste de verrouillage, dans lequel le deuxième organe d'accrochage est articulé sur le support avec trois degrés de liberté en rotation, le deuxième organe d'accrochage est sollicité élastiquement vers une position de repos lorsque ledit deuxième organe d'accrochage est déplacé par rapport à la position de repos, et des moyens élastiques sont adaptés pour exercer sur le deuxième organe d'accrochage une force de rappel croissante lorsque le deuxième organe d'accrochage s'éloigne de la position de repos.

Dans des modes de réalisation particuliers du poste de verrouillage selon le premier aspect de l'invention, le système automatique de stockage de cycles peut comporter en outre une ou plusieurs des dispositions suivantes :
- les premier et deuxième organes de verrouillage sont conçus pour que le cycle verrouillé sur le poste de verrouillage présente un plan moyen de verrouillage vertical lorsque le deuxième organe d'accrochage est en position de repos, et le deuxième organe d'accrochage est adapté pour pivoter par rapport au support selon un premier axe de rotation vertical et selon un deuxième axe de rotation horizontal parallèle au plan moyen de verrouillage
- le deuxième organe d'accrochage est articulé sur le support par une rotule solidaire dudit deuxième organe d'accrochage ;
- la rotule est montée dans un logement de rotule ayant une ouverture traversée par ledit deuxième organe d'accrochage ;
- le logement de rotule comporte :
   - une paroi avant comportant ladite ouverture et présentant une surface intérieure,
   - un fond à l'opposé de ladite ouverture,
      la rotule présentant une forme semi-sphérique ayant une partie sphérique en regard de ladite surface intérieure et une embase aplatie en regard du fond, au moins un plot en élastomère étant interposé entre l'embase et le fond du logement de rotule ;
- plusieurs plots en élastomère sont interposés entre l'embase de la rotule et le fond du logement de rotule, et sont répartis autour d'un axe central de la rotule au voisinage de la paroi avant.

Selon un deuxième aspect non revendiqué, l'invention a notamment pour but d'empêcher de verrouiller sur un poste de verrouillage, un cycle immobilisé avec un antivol.

A cet effet, selon ce deuxième aspect, l'invention propose un système automatique de stockage de cycles comprenant :
- une pluralité de cycles ayant chacun :
   - une structure montée sur roues, la structure incluant un cadre et une fourche portant un guidon et montée pivotante sur le cadre,
   - un premier organe d'accrochage monté sur ladite structure,
- une pluralité de postes de verrouillage adaptés pour recevoir et verrouiller chacun un cycle, chaque poste de verrouillage comprenant un support fixe et un deuxième organe d'accrochage, le deuxième organe d'accrochage étant adapté pour coopérer avec le premier organe d'accrochage d'un cycle pour verrouiller le cycle sur le poste de verrouillage,
   caractérisé en ce qu'il comporte en outre un organe de butée qui est monté mobile sur la structure du cycle entre une position escamotée où ledit organe de butée n'interfère pas avec le verrouillage du premier organe d'accrochage sur le deuxième organe d'accrochage, et une position de blocage où ledit organe de butée est déplacé vers le premier organe d'accrochage et empêche le verrouillage du premier organe d'accrochage sur le deuxième organe d'accrochage, l'organe de butée étant sollicité élastiquement vers la position escamotée et le logement de broche étant disposé pour que la broche d'antivol repousse l'organe de butée en position de blocage lorsque ladite broche est verrouillée dans le logement de broche.

Dans des modes de réalisation particuliers du deuxième aspect de l'invention, le système automatique de stockage de cycles peut comporter en outre une ou plusieurs des dispositions suivantes, qui peuvent être combinées avec toutes les dispositions précitées concernant le premier aspect de l'invention :
- le deuxième organe d'accrochage est adapté pour empêcher l'organe de butée de se déplacer de la position escamotée à la position de blocage lorsque le premier organe d'accrochage est verrouillé sur le deuxième organe d'accrochage ;
- l'organe de butée est monté coulissant dans le logement de broche, ledit logement de broche comportant une première extrémité ouverte adaptée pour recevoir la broche et une deuxième extrémité ouverte adaptée pour laisser passer l'organe de butée lorsqu'il est repoussé par la broche vers la position de blocage.

Par ailleurs, l'invention concerne également un cycle pour un système selon le deuxième aspect de l'invention, comprenant :
- une structure montée sur roues, la structure incluant un cadre et une fourche portant un guidon et montée pivotante sur le cadre,
- un premier organe d'accrochage monté sur ladite structure et adapté pour se verrouiller sur un deuxième organe d'accrochage appartenant à un poste de verrouillage, caractérisé en ce qu'il comporte en outre un organe de butée qui est monté mobile sur la structure du cycle entre une position escamotée où ledit organe de butée n'interfère pas avec le verrouillage du premier organe d'accrochage sur le deuxième organe d'accrochage, et une position de blocage où ledit organe de butée est déplacé vers le premier organe d'accrochage et empêche le verrouillage du premier organe d'accrochage sur le deuxième organe d'accrochage, l'organe de butée étant sollicité élastiquement vers la position escamotée et le logement de broche étant disposé pour que la broche d'antivol repousse l'organe de butée en position de blocage lorsque ladite broche est verrouillée dans le logement de broche.

### BREVE DESCRIPTION DES DESSINS

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique en perspective montrant un système automatique de stockage de cycles pouvant mettre en oeuvre l'invention,
- la figure 2 est une vue de détail en perspective d'un poste de verrouillage du système de la figure 1,
- la figure 3 est une vue en perspective de la gâche et de son support, appartenant au poste de verrouillage de la figure 2,

- les figures 4 et 5 sont des vues éclatées en perspective de la gâche et du support de la figure 3,
- la figure 6 est une vue d'arrière de l'embase de la rotule qui porte la gâche des figures 3 à 5, avec des plots en élastomère fixés au support de la gâche,
- la figure 7 est une vue en perspective d'un cycle 1 du système de la figure 1,
- les figures 8 e 9 sont des vues de détail du cycle de la figure 7,
- les figures 10 et 11 montrent l'organe d'accrochage du cycle, dans deux configurations sans et avec verrouillage d'un câble antivol,
- les figures 12 à 15 montrent une partie de station de verrouillage de cycles, avec un cycle 1 dans diverses positions,
- la figure 16 est une vue similaire à la figure 2, dans une variante de l'invention, et
- la figure 17 est un schéma bloc des constituants électriques du système de stockage automatique de cycles.

### DESCRIPTION PLUS DETAILLEE

Sur les différentes figures, les mêmes références désignent des éléments identiques ou similaires.

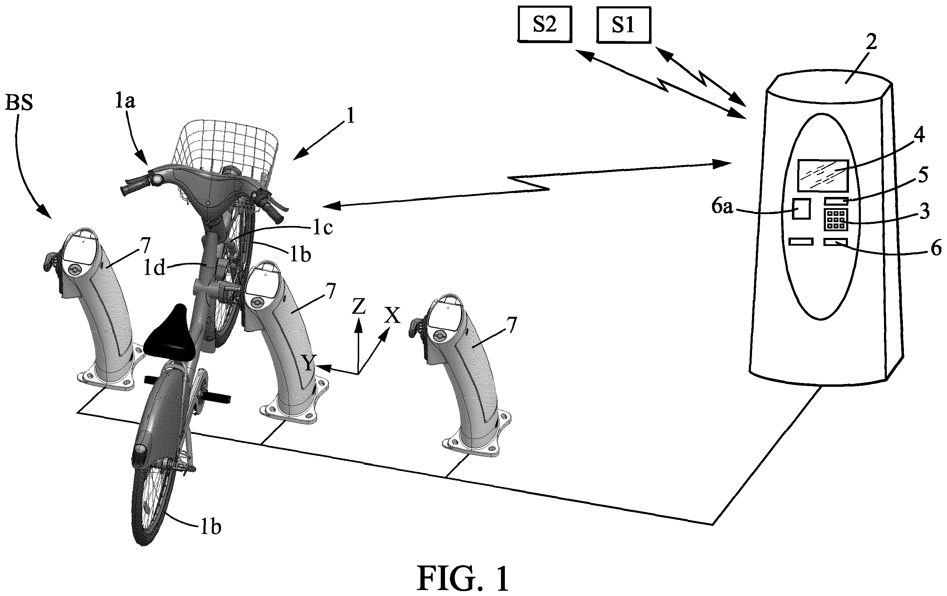

Comme représenté sur la figure 1, la présente invention concerne un système automatique de stockage de cycles 1 tels que notamment des bicyclettes, permettant par exemple de stocker des cycles sur la voie publique de façon à les mettre à disposition du public.

Chaque cycle 1 peut comporter une structure la montée sur deux roues 1b, la structure la incluant un cadre 1d et une fourche 1c portant un guidon et montée pivotante sur le cadre 1d.

Ce système automatique de stockage de cycles peut comporter plusieurs stations BS de stockage de cycles, dont une est représentée sur la figure 1. Chaque station BS de stockage de cycles comprend un poste de commande de station 2, qui peut par exemple se présenter sous la forme d'une borne interactive dotée d'une interface utilisateur comprenant par exemple un clavier 3, un écran 4 tactile ou autre, un lecteur de cartes portatives électroniques 5, un dispositif 6 d'impression de tickets, un lecteur de carte sans contact 6a, etc.

La borne interactive 2 communique d'une part, avec un serveur central S1 qui gère les abonnements et les locations de cycles, et d'autre part, le cas échéant avec un serveur S2 qui peut gérer des services aux utilisateurs accessibles sur la borne interactive 2. La communication avec les serveurs S1, S2 peut se faire notamment par voie radio.

La borne interactive 2 peut également communiquer le cas échéant, notamment par voie radio et en particulier par une liaison radio courte portée (par exemple au protocole Zigbee® ou autre), avec les cycles 1 verrouillés à la station BS ou passant à proximité.

Enfin, la borne interactive 2 communique, par exemple par voie filaire ou radio courte portée, avec des postes de verrouillage 7 sur lesquels peuvent se verrouiller des cycles 1. Les postes de verrouillage peuvent se présenter notamment sous forme de bornes fixés au sol. Chaque cycle 1 comporte un premier organe d'accrochage qui sera décrit ci-après, et qui est adapté pour se verrouiller sur un deuxième organe d'accrochage appartenant à n'importe quel poste de verrouillage 7 du système, sur n'importe quelle station BS.

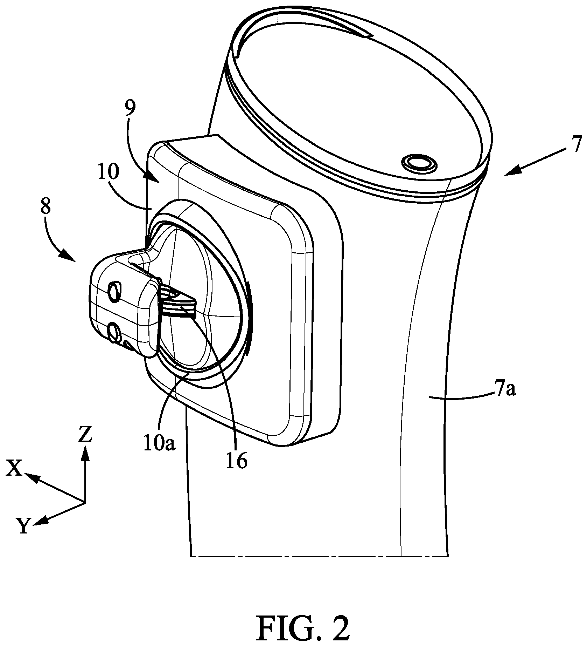

Comme on peut le voir sur la figure 2, le deuxième organe d'accrochage de chaque poste de verrouillage 7 peut se présenter sous forme d'une gâche 8 rigide articulée sur un support 9 solidaire de la structure 7a du poste de verrouillage.

Cette gâche 8 peut être par exemple en forme de C ouvert verticalement vers le haut et vers le bas ainsi qu'horizontalement dans une direction d'engagement du premier organe d'accrochage appartenant au cycle 1.

La gâche 8 est articulée sur le support 9 avec au moins deux degrés de liberté en rotation, et elle est reliée au support 9 par des moyens élastiques de rappel qui sollicitent élastiquement ladite gâche 8 une position de repos. Les moyens élastiques sont adaptés pour exercer sur le deuxième organe d'accrochage une force de rappel croissante lorsque le deuxième organe d'accrochage s'éloigne de la position de repos.

Les au moins deux degrés de liberté susmentionnés peuvent correspondre notamment à un pivotement de la gâche 8 par rapport au support 9 selon un premier axe de rotation vertical et selon un deuxième axe de rotation horizontal parallèle à un plan moyen de verrouillage X, Z qui correspond à un plan moyen vertical du cycle 1 verrouillé sur le poste de verrouillage 7 lorsque la gâche 8 est en position de repos.

Avantageusement, la gâche 8 est articulée sur le support 9 avec trois degrés de liberté en rotation, et notamment par une rotule 12 solidaire de la gâche 8.

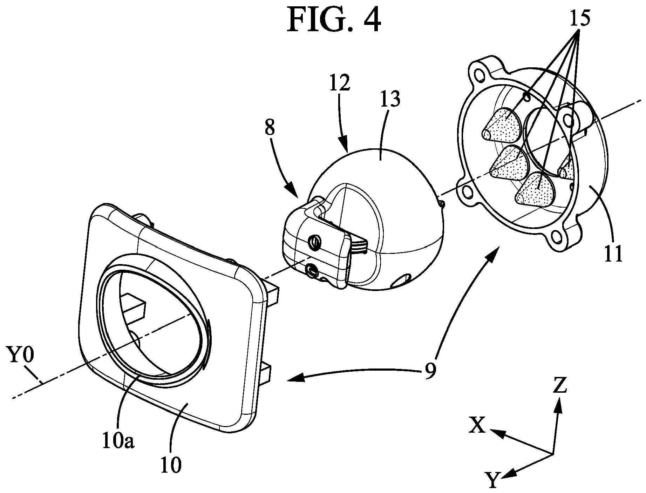

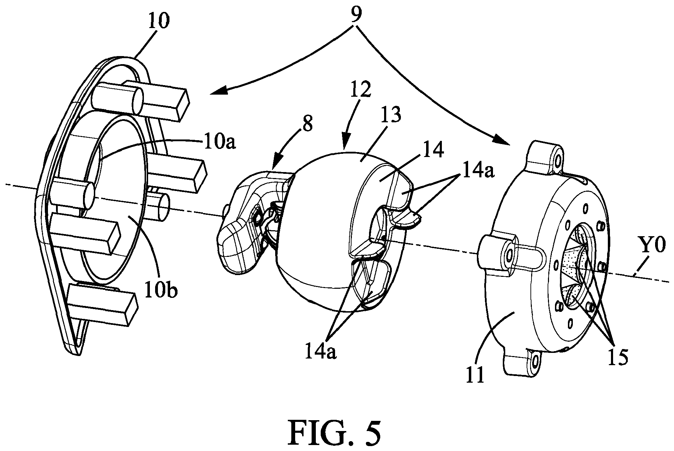

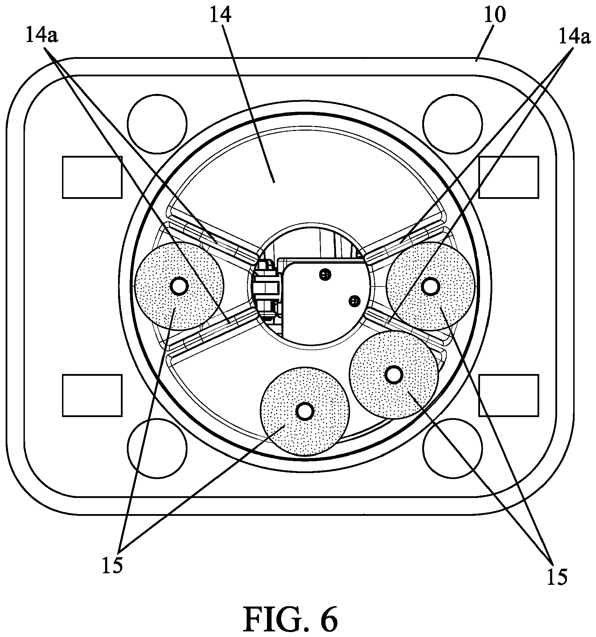

Comme représenté sur les figures 2 à 6, la rotule 12 peut être montée rotative dans le support 9, formant un logement de rotule et fixé par vissage ou autre sur la structure 7a du poste de verrouillage 7.

Le support 9 peut comporter une paroi avant 10 qui présente une ouverture 10a traversée par une partie de liaison entre la rotule 12 et la gâche 8. La paroi avant 10 présente également une surface intérieure 10b formant palier pour la rotule 12.

Le support 9 peut comporter également un fond 11 à l'opposé de la paroi avant 10 et fixé à cette paroi avant par vissage ou autre.

La rotule 12 peut présenter une forme semi-sphérique ayant une partie sphérique 13 en regard de la surface intérieure 10b de la paroi avant et une embase 14 aplatie en regard du fond 11.

Les moyens élastiques susmentionnés peuvent comprendre au moins un plot 15 en élastomère interposé entre l'embase 14 et le fond 11 du support 9.

Eventuellement, plusieurs plots 15 en élastomère peuvent être interposés entre l'embase 14 de la rotule et le fond 11 du logement de rotule. Ils peuvent être répartis autour d'un axe central Y0 de la rotule 12 vers la périphérie du fond 11. L'axe central Y0 en question peut être notamment perpendiculaire au plan moyen de verrouillage X, Z susmentionné.

L'embase 14 de la rotule peut comporter des butées 14a telles que des nervures disposées sensiblement radialement par rapport à l'axe Y0, qui encadrent au moins certains des plots 15 en élastomère pour que les plots 15 exercent leur force de rappel également lors de mouvements de rotation de la gâche 8 autour de l'axe Y0.

Bien entendu, tout autre moyen élastique connu serait utilisable pour remplir la fonction des plots 15.

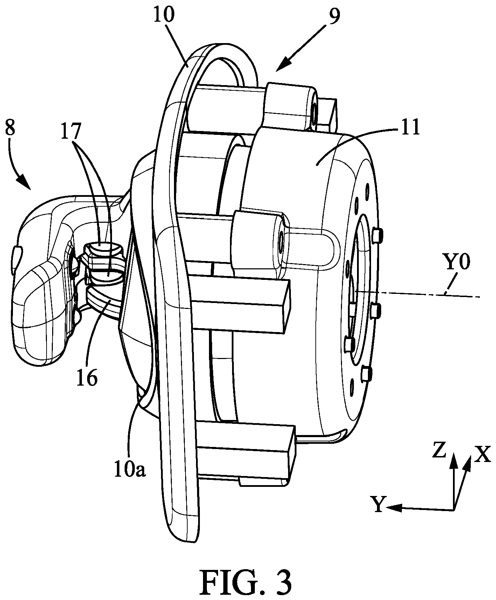

La gâche 8 comporte également un organe de verrouillage mobile 16 (figure 3), qui est actionné par un actionneur électrique (non représenté) contenu dans le support 9 et de type connu en soi. L'organe de verrouillage peut être sollicité élastiquement vers la positon de verrouillage où il est à même de bloquer le premier organe d'accrochage du cycle dans la gâche 8 pour verrouiller le cycle 1 sur le poste de verrouillage 7, et il peut être actionné par ledit actionneur électrique vers une position escamotée où il libère le premier organe d'accrochage et donc le cycle 1.

La gâche peut également comporter le cas échéant deux contacts électriques 17 superposés dont l'utilité sera vue plus loin.

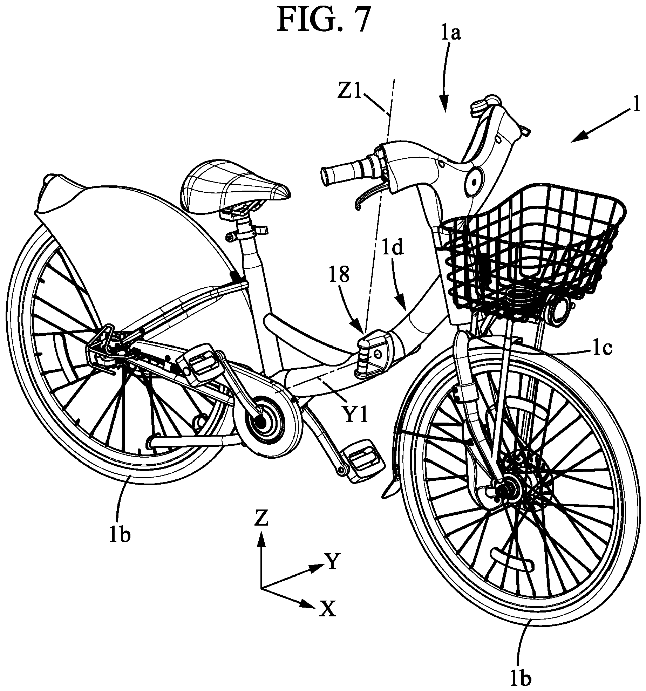

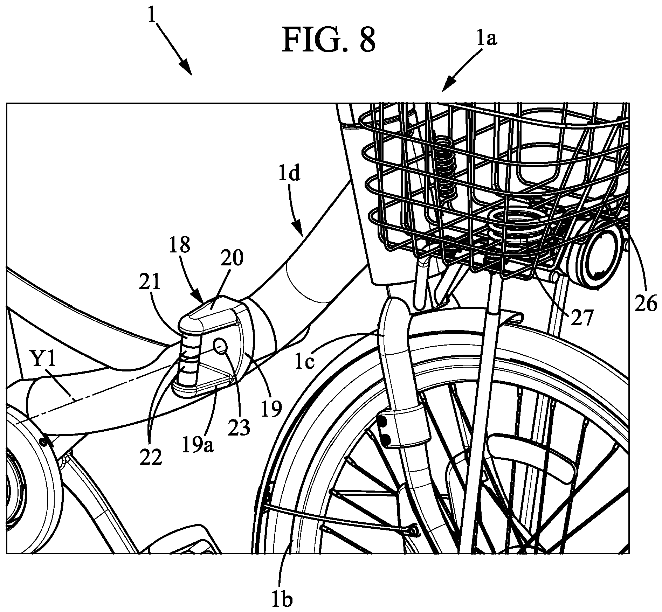

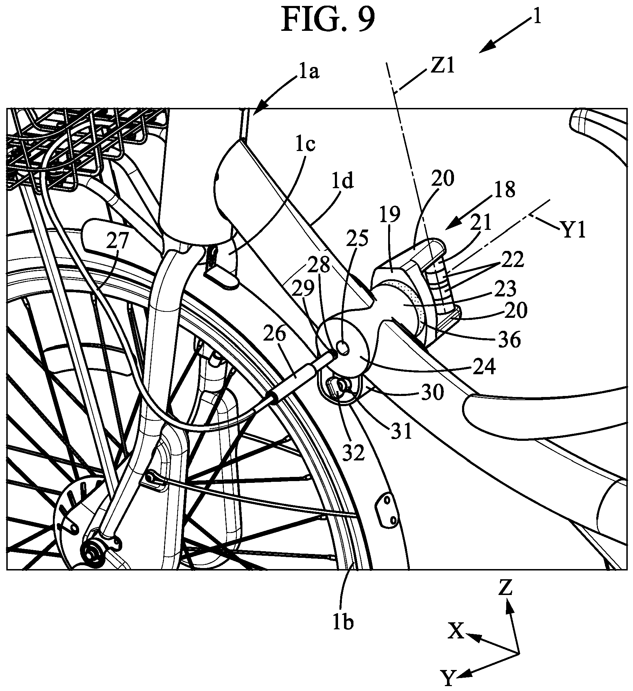

Comme représenté sur les figures 7 à 9, le premier organe d'accrochage 18 du cycle 1 est monté sur la structure la du cycle 1, notamment sur le cadre 1d.

Le premier organe d'accrochage 18 peut être sensiblement en forme d'anneau rigide. Ainsi, le premier organe d'accrochage 18 peut comporter une fourche ayant une base 19 sensiblement verticale et deux branches 20 s'étendant perpendiculairement au plan moyen X, Z du cycle, donc sensiblement horizontalement dans la position normale d'utilisation du cycle. Les deux branches 20 de la fourche sont reliées par un barreau rigide 21, orienté selon un axe Z1 qui est sensiblement vertical dans la position normale d'utilisation du cycle.

Le barreau 21 peut être cylindrique à section circulaire, ce qui permet au premier organe d'accrochage 16 et donc au cycle 1 de pivoter par rapport à la gâche 8 autour d'un axe de rotation sensiblement vertical lorsque le premier organe d'accrochage 18 est verrouillé sur la gâche 8.

Le barreau 21 peut éventuellement être réalisé en matériau électriquement isolant et comporter deux contacts électriques 22 superposés adaptés pour venir en contact électrique avec les contacts électriques 17 susmentionnés de la gâche lorsque le premier organe d'accrochage 18 est verrouillé sur la gâche 8, de façon à faire communiquer l'électronique du poste de verrouillage 7 avec l'électronique embarquée du cycle 1, et le cas échéant de façon à charger une batterie du cycle 1, notamment s'il s'agit d'un cycle à assistance électrique.

Le premier organe d'accrochage 18 peut avantageusement être articulé sur le cadre 1d du cycle, notamment le premier organe d'accrochage 18 peut être monté pivotant sur le cadre 1d autour de l'axe Y1 susmentionné. De préférence, le premier organe d'accrochage 18 est relié élastiquement au cadre 1d de façon à être sollicité élastiquement vers une position de normale (position où l'axe Z0 est vertical).

Le premier organe d'accrochage 18 peut être monté dans un tube externe 23 par exemple métallique, d'axe Y1, qui est solidaire du cadre 1d et peut le cas échéant faire partie intégrante du cadre 1d. Ce tube externe 23 peut être creux et fermé par un fond 24 à l'opposé du premier organe d'accrochage 18. Le fond 24 peut comporter une ouverture 25 adaptée pour recevoir la broche 26 d'un câble antivol 27 dont l'extrémité opposée à la broche 26 est fixée à la structure la du cycle 1, par exemple à un panier solidaire de la fourche 1c.

La broche peut comporter une tête 28 séparée du corps de la broche par une rainure périphérique 29.

L'ouverture 25 du fond 24 donne un logement de broche 33, qui débouche dans la base 19 du premier organe d'accrochage 18 par un trou 19a.

Le cycle peut en outre comporter un verrou d'antivol 30 adapté pour sélectivement verrouiller la broche 26 dans le logement de broche 33. Ce verrou d'antivol 30 peut comporter par exemple une serrure 31 à clef 32.

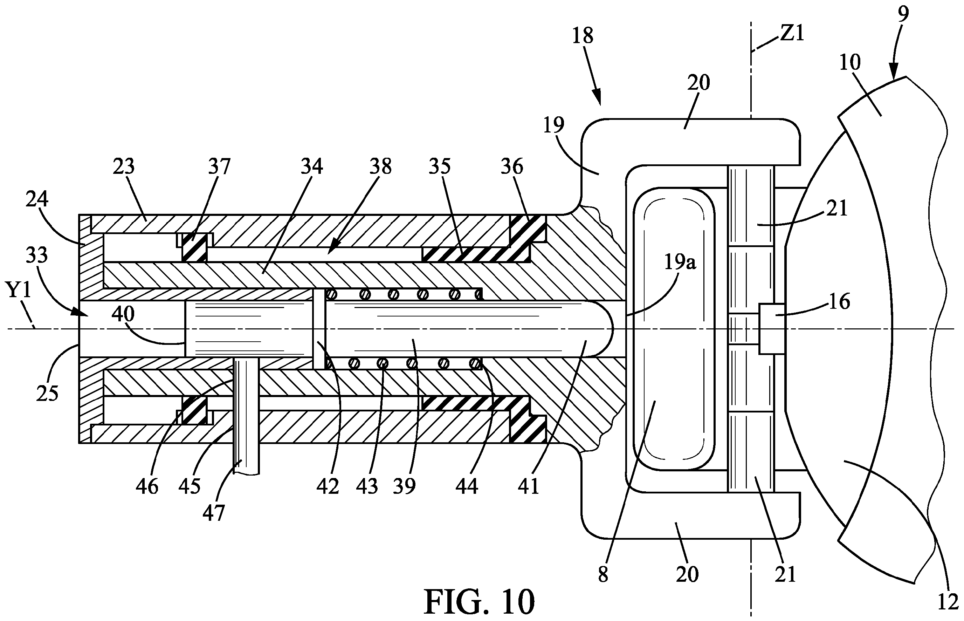

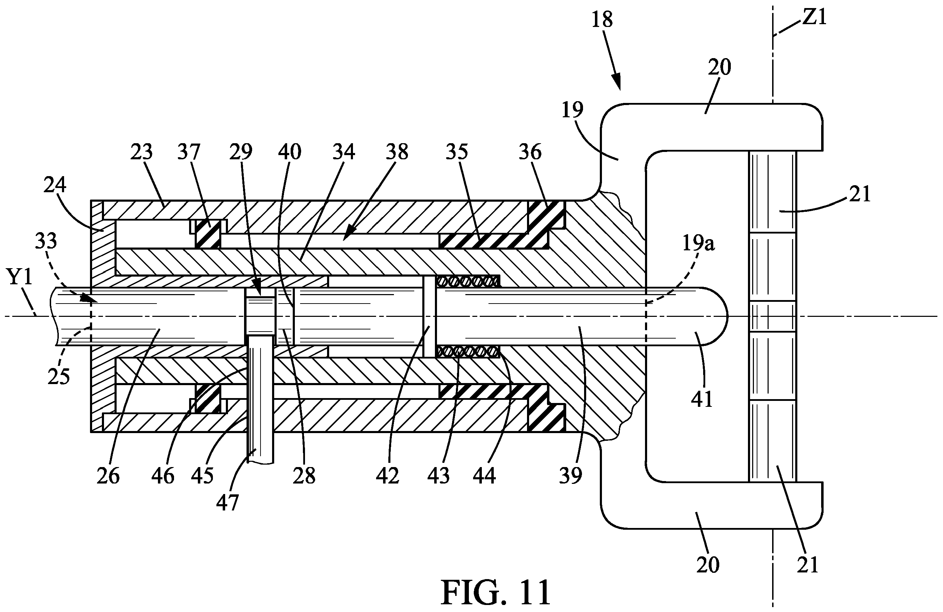

Comme représenté sur les figures 10 et 11, le logement de broche 33 peut être délimité dans un tube interne 34 solidaire du premier organe d'accrochage 18 et monté avec jeu dans le tube externe 23. Le tube interne 34 peut être monté élastiquement dans le tube externe 23, par exemple par une bague d'élastomère 35 interposée entre les deux tubes 23, 34 près du premier organe d'accrochage 18 et une bague d'élastomère 37 interposée entre les deux tubes 23, 34 près du fond 24.

La bague d'élastomère 35 peut avantageusement être adhérisée à l'intérieur du tube externe 23 et comporter des crabots ou autres reliefs engagés dans des crabots complémentaires prévus sur la face externe du tube interne 34, pour solidariser la bague 35 avec le tube interne 34 en rotation autour de l'axe Y1. La bague d'élastomère 35 permet ainsi la rotation et le rappel élastique du premier organe d'accrochage 18 vers sa position de repos autour de l'axe Y1.

La bague d'élastomère 35 peut comporter une partie annulaire externe 36 interposée axialement entre une extrémité du tube externe 23 et la base 19 du premier organe d'accrochage 18.

La bague d'élastomère 37 peut être rapportée entre les tubes 23, 34 et maintenue en place par tout moyen, notamment par au moins une bague métallique élastique.

Les bagues d'élastomères 35, 37 laissent de préférence un jeu radial 38 entre les tubes 23, 34.

Les bagues d'élastomère 35, 37 contribuent à l'amortissement des chocs et à la souplesse de la fixation du cycle 1 en cas de vandalisme sur le cycle 1 pendant qu'il est verrouillé sur un poste de verrouillage 7.

Par ailleurs, un organe de butée 39 rigide, par exemple en forme de tige métallique, peut être monté mobile sur la structure la du cycle, et notamment monté coulissant dans le logement de broche 33.

Cet organe de butée 39 peut s'étendre dans le logement de broche, selon l'axe Y1, entre une extrémité arrière 40 proche de l'ouverture 25 et une extrémité avant 41 proche du trou 19a.

L'organe de butée 39 peut être mobile entre une position escamotée (figure 10) où ledit organe de butée 39 n'interfère pas avec le verrouillage du premier organe d'accrochage 18 sur le deuxième organe d'accrochage 8, et une position de blocage (figure 11) où ledit organe de butée 39 est déplacé vers le premier organe d'accrochage 18 et empêche le verrouillage du premier organe d'accrochage 18 sur le deuxième organe d'accrochage 8.

De plus, la gâche est adaptée pour empêcher l'organe de butée 39 de se déplacer de la position escamotée à la position de blocage lorsque le premier organe d'accrochage 18 est verrouillé sur la gâche.

L'organe de butée 39 est sollicité élastiquement vers la position escamotée, par exemple par un ressort 43 agissant axialement entre un collet 42 ou autre épaulement de l'organe de butée 39, et un épaulement 44 ménagé à l'intérieur du tube interne 34.

Lorsque la broche d'antivol 26 est verrouillée dans le logement de broche 33, elle repousse l'organe de blocage 39 vers sa position de blocage.

Les tubes 23, 34 peuvent comporter des trous radiaux en regard 45, 46 dans lesquels coulisse un pêne 47 commandé par la serrure 31. Ce pêne est maintenu en position effacée, hors du logement de broche 33 par l'organe de blocage lorsque ledit organe de blocage est en position escamotée. Lorsque la broche 26 est engagée dans le logement de broche 33, le pêne 47 s'engage dans la rainure 29 de la broche sous la sollicitation d'un ressort (non représenté, connu en soi) appartenant au verrou 30. Un utilisateur peut alors tourner la clef 32 vers la position verrouillée de la serrure et emporter la clef avec soi après verrouillage de l'antivol. A défaut, la serrure 31 ne peut être actionnée par la clef 32, qui reste bloquée sur la serrure 31.

Les dispositions ci-dessus évitent qu'un cycle soit verrouillé sur un poste de verrouillage avec son antivol mis, et que l'on verrouille l'antivol en emportant la clef lorsque le cycle 1 est verrouillé sur un poste de verrouillage, donc non loué.

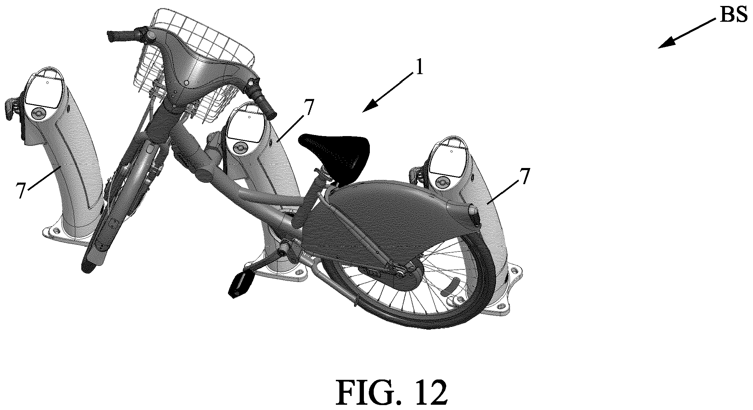

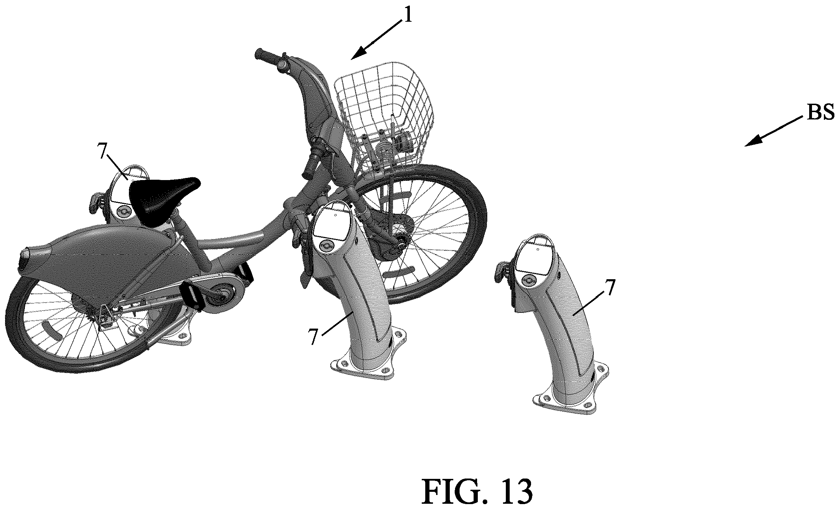

Comme représenté sur les figures 12 et 13, la fixation des cycles 1 sur les postes de verrouillage est telle que, lorsqu'un cycle 1 est verrouillé sur un poste de verrouillage 7 de la station BS qui est situé entre deux postes de verrouillages adjacents, puisse venir en butée angulaire contre chacun des deux postes de verrouillages adjacents 7, si une personne tente de le vandaliser en faisant pivoter le cycle horizontalement à partir de sa position normale telle que visible en figure 1. De cette façon, la personne n'a plus l'effet de levier qu'elle aurait si le verrouillage du cycle sur le poste de verrouillage 7 était rigide. De plus, la personne qui tente de vandaliser est alors gênée dans son action par les postes de verrouillage adjacents, voire par des cycles 1 verrouillés sur ces postes de verrouillage adjacents.

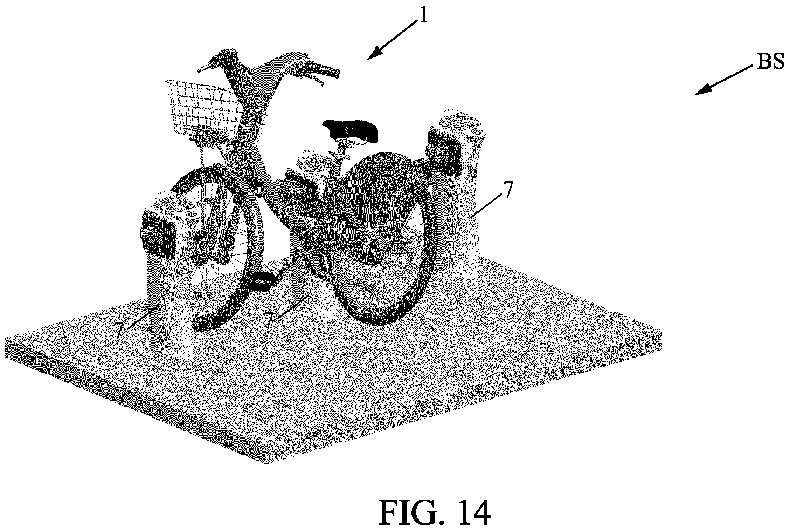

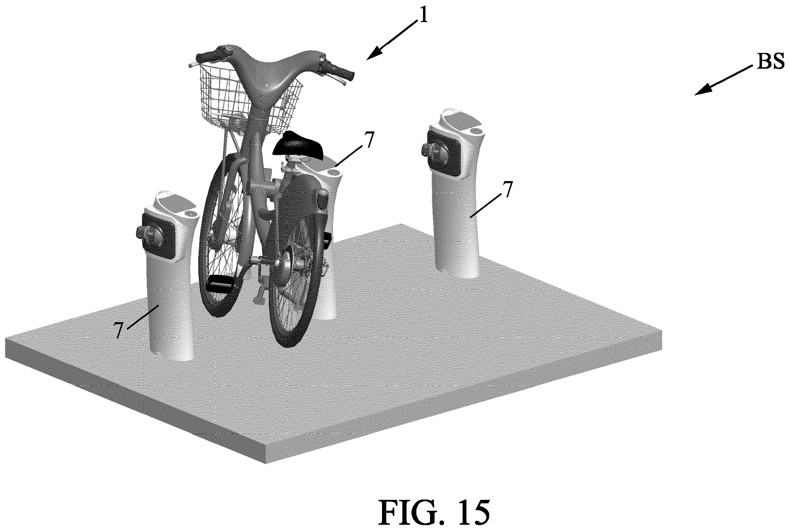

De plus, le montage de la gâche 8 permet aussi d'absorber un pivotement du cycle 1 par soulèvement d'une de ses roues, notamment la roue arrière, comme représenté sur la figure 14, ou par inclinaison de son plan moyen, comme représenté sur la figure 15.

Enfin, dans tous les cas les pièces en élastomère 15, 35, 37 amortissent les chocs dus au vandalisme.

Le système de stockage automatique de cycles décrit permet donc une protection nettement accrue contre le vandalisme.

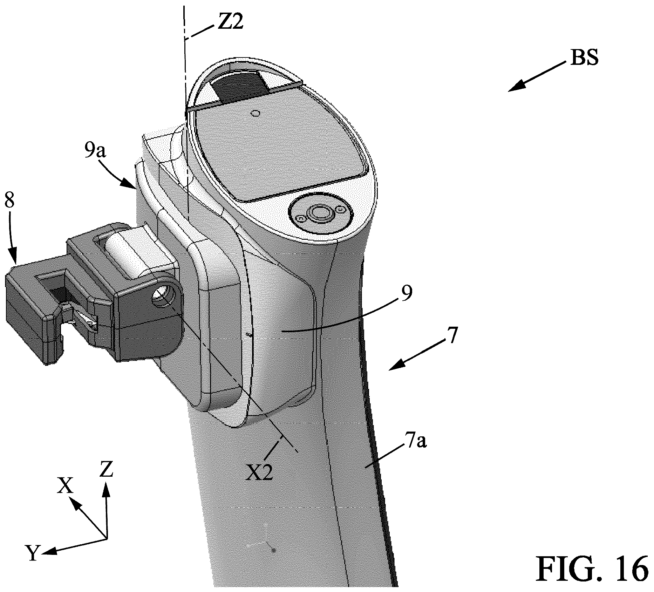

Selon une variante, comme représenté sur la figure 16, la gâche 8 pourrait ne pas être montée sur le support 9 par une rotule, mais par un montage pivotant à deux axes de rotation X2 (axe de pivotement de la gâche 8 sur un support intermédiaire 9a), Z2 (axe de pivotement du support intermédiaire 9a sur le support 9 solidaire de la structure 7a du poste de verrouillage). Dans ce cas, la gâche est encore sollicitée élastiquement vers sa position de repos où le plan moyen de verrouillage X, Z du cycle est vertical. Cette sollicitation élastique peut se faire par tous moyens élastiques connus (ressorts métalliques, pièces en élastomère ou autre) montés respectivement d'une part, entre la gâche 8 et le support intermédiaire 9a et d'autre part, entre le support intermédiaire 9a et le support 9.

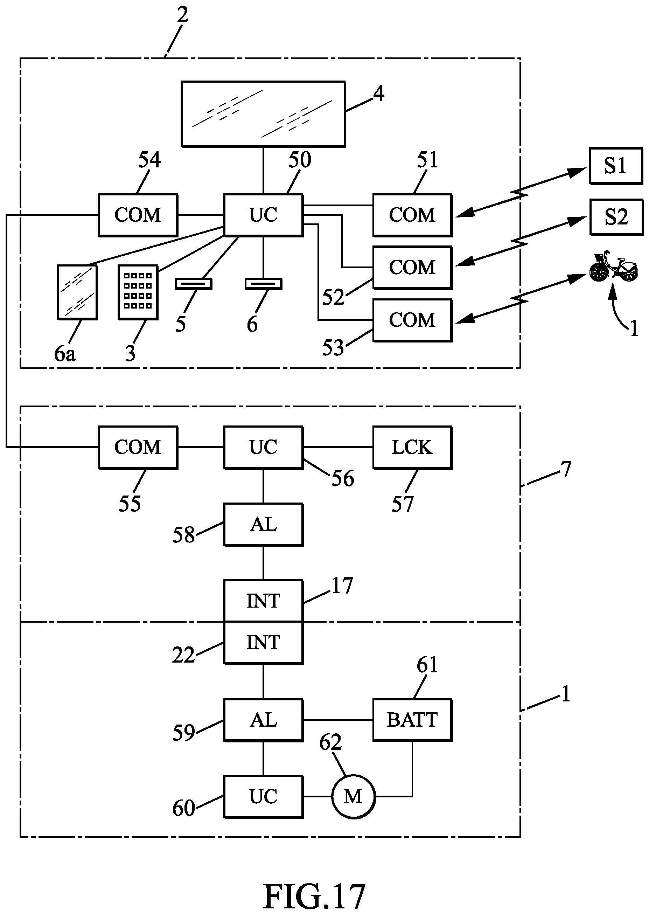

Comme représenté sur la figure 17, la borne interactive 2 peut comporter au moins une unité centrale électronique 50 (UC) telle qu'un micro-ordinateur ou similaire, reliée à :
- des interfaces de communication radio 51, 52, 53 (COM) respectivement avec les serveurs S1, S2 et les cycles 1 situés dans la station ou à proximité immédiate,
- une interface de communication 54 (COM) pour la communication avec les postes de verrouillage 7 de la station BS,
- les interfaces utilisateur 3, 4, 5, 6, 6a susmentionnées et éventuellement d'autres.

Chaque poste de verrouillage 7 peut comporter une unité centrale électronique 56 (UC) telle qu'un microcontrôleur ou autre, reliée :
- à l'actionneur de déverrouillage 57 (LCK) qui commande l'organe de verrouillage 16 susmentionné,
- à une interface de communication 55 (COM) communiquant avec l'interface 54 susmentionnée,
- à un dispositif d'alimentation électrique 58 (AL) relié au réseau électrique ou à une autre source d'énergie électrique, lui-même relié aux contacts électrique 17 (INT) susmentionnés.

Chaque cycle 1 peut comporter également une unité centrale électronique 60 (UC) telle qu'un microcontrôleur ou autre, reliée :
- à la batterie 61 (BATT) et au moteur électrique 62 (M) du cycle si le cycle est à assistance électrique,
- à un dispositif d'alimentation électrique 59 (AL) relié aux contacts 22 susmentionnés (INT), eux-mêmes reliés aux contacts électrique 17 (INT) susmentionnés du poste de verrouillage 7 lorsque le cycle est verrouillé sur un poste de verrouillage.

Le système qui vient d'être décrit fonctionne comme suit.

Lorsqu'un utilisateur veut emprunter un cycle 1 sur l'une des bornes de verrouillage 7, il peut par exemple faire lire une carte ou un ticket à puce électronique sans contact (NFC ou autre) par le lecteur 6a de la borne interactive ou par un lecteur similaire éventuellement prévu sur un poste de verrouillage 7, ou encore il peut insérer une carte électronique portative dans le lecteur 5 de la borne interactive 2 puis rentrer un code secret correspondant à cette carte, au moyen du clavier 3, de façon à s'identifier auprès de ladite borne interactive.

Après avoir vérifié les droits de l'utilisateur avec le serveur S1, la borne interactive 2 donne une autorisation de déverrouillage à l'une des bornes de verrouillage 7, de façon que l'utilisateur puisse déverrouiller le cycle 1 en place sur cette borne, par exemple en appuyant sur un bouton prévu sur cette borne, ce qui provoque la coupure de l'alimentation électrique des contacts 17 par le dispositif d'alimentation 58 et la commande de l'actionneur de déverrouillage 57 par l'unité centrale 56 du poste de verrouillage 7 pour faire passer l'organe de verrouillage 16 en position escamotée. L'utilisateur peut alors prendre le cycle 1, et l'unité centrale électronique 56 du poste de verrouillage 7 repère alors l'enlèvement du cycle 1 puisqu'elle ne peut plus communiquer avec l'unité centrale 60 de ce cycle par les contacts 17, 22. L'unité centrale électronique 56 du poste de verrouillage 7 informe alors la borne interactive 2 de cet enlèvement.

Lorsque l'utilisateur rend le cycle 1 et le met en place sur un poste de verrouillage 7, il engage le premier organe d'accrochage 18 dans la gâche 8 du poste de verrouillage, de sorte que les contacts électriques 17, 22 sont connectés ensemble et que les unités centrale 56, 60 peuvent communiquer ensemble.

Lorsque le cycle 1 est verrouillé sur le poste de verrouillage 7, l'unité centrale 56 du poste de verrouillage repère la présence du cycle 1 en communiquant avec l'unité centrale 60 du cycle, après quoi l'unité centrale 56 du poste de verrouillage communique, par les interfaces de communication 54,55, avec l'unité centrale 50 de la borne interactive 2, pour lui signaler la présence du cycle et l'identité de ce cycle communiquée par l'unité centrale 60 du cycle. L'unité centrale électronique 50 de la borne interactive 2 signale alors la fin de la période d'emprunt du cycle au serveur S1, et l'unité centrale 56 du poste de verrouillage active le dispositif d'alimentation électrique 58 pour recharger la batterie 61 du cycle.

Selon une variante (non représentée), les cycles pourraient ne pas comporter d'assistance électrique et donc ne comporteraient pas le moteur 62. Dans ce cas :
- les cycles pourraient ne pas comporter le dispositif d'alimentation 59, tandis que les postes de verrouillage 7 pourraient ne pas comporter le dispositif d'alimentation 58 et les contacts 17 ;
- les postes de verrouillage 7 pourraient comporter des transpondeurs (non représentés) capables de lire un code d'identification porté par une puce électronique appartenant au cycle.

## Revendications

1. Système automatique de stockage de cycles comprenant :
- une pluralité de cycles (1) ayant chacun :
• une structure (1a) montée sur roues (1b), la structure incluant un cadre (1d) et une fourche (1e) portant un guidon et montée pivotante sur le cadre,
• un premier organe d'accrochage (18) monté sur ladite structure (1a),
- une pluralité de postes de verrouillage (7) adaptés pour recevoir et verrouiller les cycles (1), chaque poste de verrouillage (7) comprenant un support (9) fixe et un deuxième organe d'accrochage (8), le deuxième organe d'accrochage (8) étant adapté pour coopérer avec le premier organe d'accrochage (18) d'un cycle pour verrouiller le cycle (1) sur le poste de verrouillage (7),
le deuxième organe d'accrochage (8) étant sollicité élastiquement vers une position de repos lorsque ledit deuxième organe d'accrochage est déplacé par rapport à la position de repos ,
des moyens élastiques (15) étant adaptés pour exercer sur le deuxième organe d'accrochage (8) une force de rappel croissante lorsque le deuxième organe d'accrochage (8) s'éloigne de la position de repos,
**caractérisé en ce que** le deuxième organe d'accrochage (8) est articulé sur le support (9) avec trois degrés de liberté en rotation.

2. Système automatique de stockage de cycles selon la revendication 1, dans lequel les premier et deuxième organes d'accrochage (18, 8) sont conçus pour que le cycle (1) verrouillé sur le poste de verrouillage (7) présente un plan moyen de verrouillage vertical (X, Z) lorsque le deuxième organe d'accrochage (8) est en position de repos, et le deuxième organe d'accrochage (8) est adapté pour pivoter par rapport au support (9) selon un premier axe de rotation vertical et selon un deuxième axe de rotation horizontal parallèle au plan moyen de verrouillage.

3. Système automatique de stockage de cycles selon la revendication 1, dans lequel le deuxième organe d'accrochage (8) est articulé sur le support (9) par une rotule (12) solidaire dudit deuxième organe d'accrochage (8) .

4. Système automatique de stockage de cycles selon la revendication 3, dans lequel la rotule (12) est montée dans un logement de rotule comportant :
- une paroi avant (10) comportant une ouverture (10a) vers le deuxième organe d'accrochage et présentant une surface intérieure (10b),
- un fond (11) à l'opposé de la paroi avant (10), la rotule présentant une forme semi-sphérique ayant une partie sphérique (13) en regard de ladite surface intérieure (10b) et une embase aplatie (14) en regard du fond (11), au moins un plot en élastomère (15) étant interposé entre l'embase (14) et le fond (11) du logement de rotule.

5. Système automatique de stockage de cycles selon l'une quelconque des revendications précédentes, dans lequel le premier organe d'accrochage (18) est adapté pour pivoter sur le deuxième organe d'accrochage (8) autour d'un axe de rotation (Z1) sensiblement vertical lorsque le premier organe d'accrochage (18) est verrouillé sur le deuxième organe d'accrochage (8).

6. Système automatique de stockage de cycles selon la revendication 5, dans lequel le premier organe d'accrochage (18) comporte un barreau (21) sensiblement cylindrique à section circulaire qui s'étend normalement sensiblement verticalement lorsque le cycle (1) est dans une position normale d'utilisation, le deuxième organe d'accrochage (8) comportant une gâche sensiblement en forme de C ouverte verticalement vers le haut et vers le bas en position de repos du deuxième organe d'accrochage et ouverte horizontalement selon une direction d'engagement .

7. Système automatique de stockage de cycles selon l'une quelconque des revendications précédentes, comportant au moins une station (BS) de stockage de cycles qui comprend plusieurs postes de verrouillage (7) juxtaposés se présentant sous forme de bornes fixées au sol, le deuxième organe d'accrochage (8) étant adapté pour permettre au cycle (1) de pivoter horizontalement sur une plage angulaire telle qu'un cycle (1) verrouillé sur un poste de verrouillage (7) situé entre deux postes de verrouillages adjacents, puisse venir en butée angulaire contre chacun des deux postes de verrouillages adjacents.

8. Système automatique de stockage de cycles selon l'une quelconque des revendications précédentes, dans lequel le cycle présente un plan moyen vertical (X, Z) en position normale d'utilisation et le premier organe d'accrochage (18) est monté pivotant sur la structure (1a) autour d'un axe de rotation (Y1) sensiblement perpendiculaire au plan moyen du cycle et le premier organe d'accrochage est relié élastiquement à la structure (1a) du cycle de façon à être sollicité élastiquement vers une position de normale.

9. Système automatique de stockage de cycles selon l'une quelconque des revendications précédentes, dans lequel le cycle (1) comporte :
- un câble antivol (27) ayant une première extrémité solidaire de la structure (1a) du cycle et une deuxième extrémité pourvue d'une broche (26), adaptée pour s'engager dans un logement de broche (33) ménagé dans la structure du cycle,
- un verrou d'antivol (30) adapté pour sélectivement verrouiller la broche (26) dans le logement de broche (33),
- un organe de butée (39) qui est monté mobile sur la structure (1a) du cycle entre une position escamotée où ledit organe de butée n'interfère pas avec le verrouillage du premier organe d'accrochage (18) sur le deuxième organe d'accrochage (8), et une position de blocage où ledit organe de butée est déplacé vers le premier organe d'accrochage et empêche le verrouillage du premier organe d'accrochage sur le deuxième organe d'accrochage, l'organe de butée étant sollicité élastiquement vers la position escamotée et le logement de broche étant disposé pour que la broche d'antivol repousse l'organe de butée en position de blocage lorsque ladite broche est verrouillée dans le logement de broche.

10. Système automatique de stockage de cycles selon la revendication 9, dans lequel le deuxième organe d'accrochage (8) est adapté pour empêcher l'organe de butée (39) de se déplacer de la position escamotée à la position de blocage lorsque le premier organe d'accrochage (18) est verrouillé sur le deuxième organe d'accrochage (8).

11. Système automatique de stockage de cycles selon la revendication 9 ou la revendication 10, dans lequel l'organe de butée (39) est monté coulissant dans le logement de broche (33), ledit logement de broche comportant une première extrémité ouverte adaptée pour recevoir la broche (26) et une deuxième extrémité ouverte adaptée pour laisser passer l'organe de butée lorsqu'il est repoussé par la broche vers la position de blocage.

12. Poste de verrouillage (7) pour un système selon l'une quelconque des revendications précédentes, adapté pour verrouiller un cycle ayant un premier organe d'accrochage (18), le poste de verrouillage comprenant un support fixe (9) et un deuxième organe d'accrochage (8), le deuxième organe d'accrochage étant adapté pour coopérer avec le premier organe d'accrochage d'un cycle pour verrouiller le cycle sur le poste de verrouillage, dans lequel le deuxième organe d'accrochage (8) est sollicité élastiquement vers une position de repos lorsque ledit deuxième organe d'accrochage est déplacé par rapport à la position de repos, et des moyens élastiques (15) sont adaptés pour exercer sur le deuxième organe d'accrochage (8) une force de rappel croissante lorsque le deuxième organe d'accrochage (8) s'éloigne de la position de repos,
**caractérisé en ce que** le deuxième organe d'accrochage (8) est articulé sur le support (9) avec trois degrés de liberté en rotation.

## Patentansprüche

1. Automatisches System zum Abstellen von Fahrrädern, aufweisend:
- mehrere Fahrräder (1) mit jeweils:
* einer an Rädern (1b) angebrachten Struktur (1a), wobei die Struktur einen Rahmen (1d) und eine drehbar an dem Rahmen angebrachte Gabel (1c) mit einer Lenkstange aufweist,
* einem an der Struktur (1a) angebrachten ersten Eingriffselement (18),
- mehrere Verriegelungsposten (7), die eingerichtet sind, die Fahrräder (1) zu empfangen und zu verriegeln, wobei jeder Verriegelungsposten (7) einen starren Träger (9) und ein zweites Eingriffselement (8) aufweist, wobei das zweite Eingriffselement (8) eingerichtet ist, mit dem ersten Eingriffselement (18) eines Fahrrads zusammenzuwirken, um das Fahrrad (1) an dem Verriegelungsposten (7) zu verriegeln,
wobei das zweite Eingriffselement (8) in Richtung einer Ruheposition elastisch vorgespannt ist, wenn das zweite Eingriffselement bezüglich der Ruheposition verschoben ist, wobei elastische Mittel (15) eingerichtet sind, auf das zweite Eingriffselement (8) eine Rückstellkraft auszuüben, die zunimmt, wenn das zweite Eingriffselement (8) sich aus der Ruheposition entfernt,
**dadurch gekennzeichnet, dass** das zweite Eingriffselement (8) gelenkig mit drei Rotationsfreiheitsgraden an dem Träger (9) angebracht ist.

2. Automatisches System zum Abstellen von Fahrrädern nach Anspruch 1, wobei das erste und zweite Eingriffselement (18, 8) derart konzipiert sind, dass das an dem Verriegelungsposten (7) verriegelte Fahrrad (1) eine mittlere vertikale Verriegelungsebene (X, Z) darstellt, wenn das zweite Eingriffselement (8) in der Ruheposition ist, und das zweite Eingriffselement (8) bezüglich des Trägers (9) um eine erste vertikale Drehachse und um eine zweite horizontale Drehachse, die parallel zu der mittleren Verriegelungsebene ist, drehbar ist.

3. Automatisches System zum Abstellen von Fahrrädern nach Anspruch 1, wobei das zweite Eingriffselement (8) über ein mit dem zweiten Eingriffselement (8) verbundenes Kugelgelenk (12) gelenkig an dem Träger (9) angebracht ist.

4. Automatisches System zum Abstellen von Fahrrädern nach Anspruch 3, wobei das Kugelgelenk (12) in einem Kugelgelenklager angeordnet ist, das aufweist:
- eine vordere Wand (10), die eine Öffnung (10a) zum zweiten Eingriffselement aufweist und eine Innenfläche (10b) darstellt,
- einen der vorderen Wand (10) gegenüberliegenden Boden (11),
wobei das Kugelgelenk eine Halbkugelform mit einem kugelförmigen Teil (13) gegenüber der Innenfläche (10b) und mit einer abgeflachten Basis (14) gegenüber dem Boden (11) hat, wobei mindestens ein Elastomerstück (15) zwischen der Basis (14) und dem Boden (11) des Kugelgelenklagers angeordnet ist.

5. Automatisches System zum Abstellen von Fahrrädern nach einem der vorstehenden Ansprüche, wobei das erste Eingriffselement (18) an dem zweiten Eingriffselement (8) um eine Drehachse (Z1), die im Wesentlichen vertikal ist, drehbar ist, wenn das erste Eingriffselement (18) an dem zweiten Eingriffselement verriegelt (8) ist.

6. Automatisches System zum Abstellen von Fahrrädern nach Anspruch 5, wobei das erste Eingriffselement (18) einen im Wesentlichen zylindrischen Stab (21) mit kreisförmigem Querschnitt aufweist, der sich normalerweise im Wesentlichen vertikal erstreckt, wenn das Fahrrad (1) in einer normalen Verwendungsposition ist, wobei das zweite Eingriffselement (8) einen im Wesentlichen C-förmigen Schließhaken aufweist, der in der Ruheposition des zweiten Eingriffselements vertikal nach oben und nach unten offen ist und horizontal in einer Eingriffsrichtung offen ist.

7. Automatisches System zum Abstellen von Fahrrädern nach einem der vorstehenden Ansprüche, aufweisend mindestens eine Station (BS) zum Abstellen von Fahrrädern, die mehrere nebeneinander angeordnete Verriegelungsposten (7) in Form von am Boden befestigten Säulen aufweist, wobei das zweite Eingriffselement (8) konfiguriert ist, dem Fahrrad (1) eine horizontale Drehung über einen solchen Winkelbereich zu erlauben, dass ein Fahrrad (1), das an einem Verriegelungsposten (7), der sich zwischen zwei benachbarten Verriegelungsposten befindet, im Winkelanschlag gegen jeden der zwei benachbarten Verriegelungsposten kommen kann.

8. Automatisches System zum Abstellen von Fahrrädern nach einem der vorstehenden Ansprüche, wobei das Fahrrad in einer normalen Verwendungsposition eine mittlere vertikale Ebene (X, Z) darstellt und das erste Eingriffselement (18) an der Struktur (1a) derart angebracht ist, dass es um eine Drehachse (Y1), die im Wesentlichen senkrecht zur mittleren Ebene des Fahrrads ist, drehbar ist, und das erste Eingriffselement elastisch mit der Struktur (1a) des Fahrrads verbunden ist, so dass es in Richtung einer Normalposition elastisch vorgespannt ist.

9. Automatisches System zum Abstellen von Fahrrädern nach einem der vorstehenden Ansprüche, wobei das Fahrrad (1) aufweist:
- ein Schlosskabel (27), das ein mit der Struktur (1a) des Fahrrads fest verbundenes erstes Ende und ein zweites Ende hat, das mit einem Zapfen (26) versehen ist, der eingerichtet ist, in eine in die Struktur des Fahrrads ausgesparte Zapfenaufnahme (33) eingesetzt zu werden,
- einen Schlossriegel (30), der eingerichtet ist, den Zapfen (26) in der Zapfenaufnahme (33) selektiv zu verriegeln,
- ein Anschlagelement (39), das beweglich an der Struktur (1a) des Fahrrads zwischen einer zurückgezogenen Position, in welcher das Anschlagelement das Verriegeln des ersten Eingriffselements (18) an dem zweiten Eingriffselement (8) nicht behindert, und einer Blockadeposition, in welcher das Anschlagelement zum ersten Eingriffselement hin verschoben ist und das Verriegeln des ersten Eingriffselements an dem zweiten Eingriffselement behindert, angebracht ist, wobei das Anschlagelement elastisch in Richtung zurückgezogene Position vorgespannt ist und die Zapfenaufnahme so angeordnet ist, dass der Schlosszapfen das Anschlagelement zurück in die Blockadeposition schiebt, wenn der Zapfen in der Zapfenaufnahme verriegelt ist.

10. Automatisches System zum Abstellen von Fahrrädern nach Anspruch 9, wobei das zweite Eingriffselement (8) eingerichtet ist, das Anschlagelement (39) daran zu hindern, sich von der zurückgezogenen Position in die Blockadeposition zu verschieben, wenn das erste Eingriffselement (18) an dem zweiten Eingriffselement (8) verriegelt ist.

11. Automatisches System zum Abstellen von Fahrrädern nach Anspruch 9 oder Anspruch 10, wobei das Anschlagelement (39) gleitbar in der Zapfenaufnahme (33) eingesetzt ist, wobei die Zapfenaufnahme ein erstes offenes Ende zum Empfangen des Zapfens (26) und ein zweites offenes Ende aufweist, um das Anschlagelement passieren zu lassen, wenn es von dem Zapfen zurück in Richtung Blockadeposition geschoben wird.

12. Verriegelungsposten (7) für ein System nach einem der vorstehenden Ansprüche, zum Verriegeln eines Fahrrads, das ein erstes Eingriffselement (18) hat, wobei der Verriegelungsposten einen starren Träger (9) und ein zweites Eingriffselement (8) aufweist, wobei das zweite Eingriffselement eingerichtet ist, mit dem ersten Eingriffselement eines Fahrrads zusammenzuwirken, um das Fahrrad an dem Verriegelungsposten zu verriegeln,
wobei das zweite Eingriffselement (8) in Richtung einer Ruheposition elastisch vorgespannt ist, wenn das zweite Eingriffselement bezüglich der Ruheposition verschoben ist, und
elastische Mittel (15) eingerichtet sind, auf das zweite Eingriffselement (8) eine Rückstellkraft auszuüben, die zunimmt, wenn das zweite Eingriffselement (8) sich aus der Ruheposition entfernt,
**dadurch gekennzeichnet, dass** das zweite Eingriffselement (8) gelenkig mit drei Rotationsfreiheitsgraden an dem Träger (9) angebracht ist.

## Claims

1. An automatic cycle storage system comprising:
- a plurality of cycles (1) each having:
• a structure (1a) mounted on wheels (1b), the structure comprising a frame (1d) and a fork (1c) supporting a handlebar and pivotably mounted on the frame,
• a first coupling member (18) mounted on said structure (1a),
- a plurality of locking stations (7) adapted to receive and lock the cycles, each locking station (7) comprising a fixed support (9) and a second coupling member (8), the second coupling member (8) being adapted to engage with the first coupling member (18) of a cycle in order to lock the cycle (1) to the locking station (7),
the second coupling member (8) being resiliently biased towards a rest position when said second coupling member is moved relative to the rest position,
elastic means (15) being adapted to exert an increasing return force on the second coupling member (8) when the second coupling member (8) moves away from the rest position,
**characterized in that** the second coupling member (8) being hinged on the support (9) with three degrees of freedom in rotation.

2. Automatic cycle storage system according to claim 1, wherein the first and second coupling members (18, 8) are designed so that the cycle (1) locked to the locking station (7) has an vertical locking midplane (X, Z) when the second coupling member (8) is in the rest position, and the second coupling member (8) is adapted to pivot relative to the support (9) on a vertical first axis of rotation and on a horizontal second axis of rotation parallel to the locking midplane.

3. Automatic cycle storage system according to claim 1, wherein the second coupling member (8) is hinged on the support (7) by a ball (12) integral to said second coupling member (8).

4. Automatic cycle storage system according to claim 3, wherein the ball (12) is mounted in a ball joint housing comprising:
- a front wall (10) comprising an opening (10a) toward the second coupling member and having an inner surface (10b),
- a bottom (11) opposite to the front wall (10), the ball presenting a semi-spherical shape having a spherical portion (13) facing said inner surface (10b) and a flattened base (14) facing the bottom (11), at least one elastomer stud (15) being interposed between the base (14) and the bottom (11) of the ball joint housing.

5. Automatic cycle storage system according to any one of the preceding claims, wherein the first coupling member (18) is adapted to pivot on the second coupling member (8) about a substantially vertical axis of rotation (Z1) when the first coupling member (18) is locked to the second coupling member (8).

6. Automatic cycle storage system according to claim 5, wherein the first coupling member (18) comprises a substantially cylindrical rod (21) of circular cross-section which normally extends substantially vertically when the cycle (1) is a normal usage position, the second coupling member (8) comprising a substantially C-shaped hook that is open vertically upwards and downwards in the rest position of the second coupling member and open horizontally in a direction of engagement.

7. Automatic cycle storage system according to any one of the preceding claims, comprising at least one cycle storage station (BS) which comprises a plurality of juxtaposed locking stations (7) in the form of terminals fixed to the ground, the second coupling member (8) being adapted to enable the cycle (1) to pivot horizontally through an angular range such that a cycle (1) locked to a locking station (7) located between two adjacent locking stations can come into angular abutment against each of the two adjacent locking stations.

8. Automatic cycle storage system according to any one of the preceding claims, wherein the cycle has a vertical midplane (X, Z) in the normal usage position and the first coupling member (18) is mounted on the structure (1a) so as to pivot about an axis of rotation (Y1) substantially perpendicular to the midplane of the cycle, and the first coupling member is resiliently connected to the structure (1a) of the cycle so as to be resiliently biased towards a normal position.

9. Automatic cycle storage system according to any one of the preceding claims, wherein the cycle (1) comprises:
- an anti-theft cable (27) having a first end integral to the cycle structure (1a) and a second end provided with a pin (26) adapted to engage with a pin housing (33) arranged in the cycle structure,
- an anti-theft lock (30) adapted to selectively lock the pin (26) in the pin housing (33),
- an abutment member (39) which is mounted on the cycle structure (1a) so as to move between a retracted position where said abutment member does not interfere with the locking of the first coupling member (18) to the second coupling member (8), and a blocking position where said abutment member is moved towards the first coupling member and prevents the first coupling member from locking to the second coupling member, the abutment member being resiliently biased towards the retracted position and the pin housing being arranged so that the anti-theft pin pushes the abutment member into the blocking position when said pin is locked in the pin housing.

10. Automatic cycle storage system according to claim 9, wherein the second coupling member (8) is adapted to prevent the abutment member (39) from moving from the retracted position to the blocking position when the first coupling member (18) is locked to the second coupling member (8).

11. Automatic cycle storage system according to claim 9 or claim 10, wherein the abutment member (39) is mounted so as to slide in the pin housing (33), said pin housing comprising an open first end adapted to receive the pin (26) and an open second end adapted to allow the passage of the abutment member when pushed by the pin to the blocking position.

12. A locking station for a system according to any one of the preceding claims, adapted to lock a cycle having a first coupling member (18), the locking station comprising a fixed support (9) and a second coupling member (8), the second coupling member being adapted to engage with the first coupling member of a cycle in order to lock the cycle to the locking station, wherein the second coupling member (8) is resiliently biased towards a rest position when said second coupling member is moved relative to the rest position,
and elastic means (15) are adapted to exert an increasing return force on the second coupling member (8) when the second coupling member (8) moves away from the rest position,
**characterized in that** the second coupling member (8) being hinged on the support (9) with three degrees of freedom in rotation.
